# EUROPEAN PATENT APPLICATION

(11) **EP 3 122 123 A1**
(43) Date of publication of application: **25.01.2017**
(21) Application number: 15765907.9
(22) Date of filing: 13.03.2015
(51) Int. Cl.: H04W 52/38, H04J 1/00, H04J 11/00, H04W 16/14, H04W 72/04

(54) **WIRELESS BASE STATION, USER TERMINAL, AND WIRELESS COMMUNICATION METHOD**

(30) Priority: 19.03.2014 JP 2014056966
(71) Applicant: NTT DOCOMO, INC., Chiyoda-ku Tokyo 100-6150 (JP)
(72) Inventor: HARADA, Hiroki, Tokyo 100-6150 (JP); TAKEDA, Kazuki, Tokyo 100-6150 (JP); KAKISHIMA, Yuichi, Tokyo 100-6150 (JP); NAGATA, Satoshi, Tokyo 100-6150 (JP)
(74) Representative: Hoffmann Eitle
(86) International application number: PCT/JP2015/057498
(87) International publication number: WO 2015/141583

(57) **Abstract**

The present invention is designed to reduce mutual interference and furthermore prevent the decrease of throughput in a radio communication system (LTE-U) to operate LTE in an unlicensed band. A radio base station communicates with a user terminal by using an unlicensed band, and has a detection section that detects signals transmitted from other transmission points in the unlicensed band, a power control section that controls DL transmission power to apply to the unlicensed band based on detection results in the detection section, and a transmission section that transmits signals by using the DL transmission power determined in the power control section, and, in this radio base station, control is executed so that information related to the DL transmission power is reported to the user terminal.

## Description

### RADIO COMMUNICATION METHOD

### Technical Field

The present invention relates to a radio base station, a user terminal and a radio communication method that are applicable to a next-generation communication system.

### Background Art

In the UMTS (Universal Mobile Telecommunications System) network, the specifications of long term evolution (LTE) have been drafted for the purpose of further increasing high speed data rates, providing lower delays and so on (see non-patent literature 1). In LTE, as multiple-access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink). Also, successor systems of LTE (referred to as, for example, "LTE-advanced" or "LTE enhancement" (hereinafter referred to as "LTE-A")) have been developed for the purpose of achieving further broadbandization and increased speed beyond LTE, and the specifications thereof have been drafted (Re. 10/11).

For future radio communication systems (Rel. 12 and later versions), a system (LTE-U: LTE Unlicensed) is under study, which allows LTE systems to be operated not only in frequency bands licensed to communications providers (operators) (licensed bands), but also in frequency bands that require no license (unlicensed bands). A licensed band refers to a band in which a specific provider is allowed exclusive use, and an unlicensed band refers to a band, which is not limited to a specific provider, and in which radio stations can be provided. For unlicensed bands, for example, the 2.4 GHz band and the 5 GHz band where Wi-Fi and Bluetooth (registered trademark) can be used, the 60 GHz band where millimeter-wave radars can be used, and so on are under study for use.

### Citation List

### Non-Patent Literature

Non-Patent Literature 1 : 3GPP TS 36. 300 "Evolved UTRA and Evolved UTRAN Overall Description"

### Summary of Invention

### Technical Problem

Existing LTE presumes operation in licensed bands, and therefore each operator is allocated a different frequency band. However, unlike a licensed band, an unlicensed band is not limited to use by a specific provider. Consequently, there is a possibility that the frequency band which a given operator uses in LTE-U overlaps the frequency band which another operator uses for LTE-U and/or Wi-Fi. Furthermore, in unlicensed bands, it might occur that, not only operators, but also non-operators (for example, individuals) set up radio base stations that use LTE-U (LTE-U base stations).

When LTE is operated in an unlicensed band, this operation may be carried out without even synchronization, coordination and/or cooperation between different operators and/or non-operators. In this case, a plurality of operators and/or others share and use the same frequency in the unlicensed band, and therefore there is a threat of producing mutual interference.

So, Wi-Fi systems that operate in unlicensed bands employ carrier sense multiple access/collision avoidance (CSMA/CA), which is based on the mechanism of LBT (Listen Before Talk). To be more specific, for example, the method whereby each transmission point (AP (Access Point) or TP (Transmission Point)) performs listening (CCA: Clear Channel Assessment) before carrying out transmission, and carries out DL transmission only when there is no signal beyond a predetermined level is used.

Similarly, in LTE-U, too, a method whereby every LTE-U base station stops DL transmission depending on the result of listening may be employed. However, in this case, synchronization cannot be established between LTE-U base stations and user terminals, so that the user terminals have to undergo, again, the synchronization process with the LTE-U base stations again. Also, in heavy-traffic areas, the problem of decreased spectral efficiency arises because there are more periods where DL signals cannot be transmitted from LTE-U base stations. As a result of this, there is a threat that the throughput in the LTE-U system will decrease.

The present invention has been made in view of the above, and it is therefore an object of the present invention to provide a radio base station, a user terminal and a radio communication method, which can reduce mutual interference, and which can furthermore prevent the decrease of throughput in a radio communication system that operates LTE in an unlicensed band (LTE-U).

### Solution to Problem

According to one aspect of the present invention, a radio base station, which communicates with a user terminal by using an unlicensed band, is provided with a detection section that detects signals transmitted from other transmission points in the unlicensed band, a power control section that controls DL transmission power to apply to the unlicensed band based on detection results in the detection section, and a transmission section that transmits signals by using the DL transmission power determined in the power control section, and, in this radio base station, control is executed so that information related to the DL transmission power is reported to the user terminal.

### Advantageous Effects of Invention

According to one aspect of the present invention, in a radio communications system to operate LTE in an unlicensed band (LTE-U), it becomes possible to reduce mutual interference, and, furthermore, prevent the decrease of throughput.

### Brief Description of Drawings

FIGs. 1 provide diagrams to show examples of modes of operation in the event LTE is used in an unlicensed band;
FIG. 2 is a diagram to explain an example of a method whereby an LTE-U base station controls DL transmission power based on LBT;
FIG. 3 is a diagram to explain an example of a method whereby an LTE-U base station controls DL transmission power based on LBT, and, furthermore, reports DL transmission power information;
FIG. 4 is a diagram to explain another example of a method whereby an LTE-U base station controls DL transmission power based on LBT, and, furthermore, reports DL transmission power information;
FIGs. 5 provide diagrams to show examples of the relationship between the indices (bit values) configured in DCI format 3/3A and DL TPC values;
FIG. 6 is a schematic diagram to show an example of a radio communication system according to the present embodiment;
FIG. 7 is a diagram to explain an overall structure of a radio base station according to the present embodiment;
FIG. 8 is a diagram to explain a functional structure of a radio base station according to the present embodiment;
FIG. 9 is a diagram to explain an overall structure of a user terminal according to the present embodiment; and
FIG. 10 is a diagram to explain a functional structure of a user terminal according to the present embodiment.

### Description of Embodiments

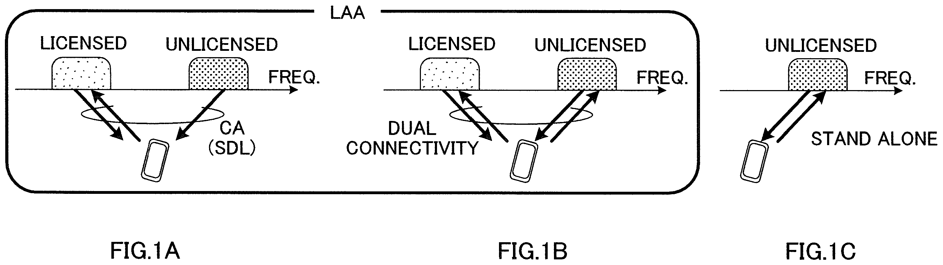

FIGs. 1 show modes of operation for a radio communication system (LTE-U) that may be applicable to the present embodiment. FIG. 1A shows a mode of operation, in which carrier aggregation (CA) is executed by using a licensed band and an unlicensed band. Also, FIG. 1B shows a mode of operation in which dual connectivity (DC) is executed by using a licensed band and an unlicensed band. Furthermore, FIG. 1C shows a mode of operation in which stand-alone is applied executed by using a licensed band and an unlicensed band. Note that, in the following description, a radio base station to operate LTE in an unlicensed band will also be referred to as an "LTE-U base station."

Illustrated in FIG. 1A, carrier aggregation (CA) refers to bundling a plurality of component carriers (also referred to as "CCs," "carriers," "cells," etc.) into a wide band. Each CC has, for example, a bandwidth of maximum 20 MHz, so that, if maximum five CCs are bundled, a wide band of maximum 100 MH can be achieved.

When CA is employed, one radio base station's scheduler controls scheduling of a plurality of CCs. From this, CA may be referred to as "intra-base station CA" (intra-eNB CA). Also, in FIG. 1A, the unlicensed band may be used as a supplemental downlink (SDL). Here, a supplemental downlink refers to a carrier (band) that is used exclusively for DL communication.

Note that, according to the present embodiment, a DL signal in a licensed band and a DL signal in an unlicensed band can be transmitted from one transmission point (for example, a radio base station). In this case, an LTE-U base station can communication with user terminals by using a licensed band and an unlicensed band. Alternatively, it is equally possible to transmit a DL signal in a licensed band and a DL signal in an unlicensed band from different transmission points, separately (for example, one from a radio base station and the other one from an RRH (Remote Radio Head) connected to the radio base station).

Illustrated in FIG. 1B, dual connectivity (DC) is the same as CA in bundling a plurality of CCs into a wide bad. When DC is employed, a plurality of schedulers are provided individually, so that these multiple schedulers each control scheduling of one or more CCs managed thereunder. From this, DC may be referred to as "inter-base station CA" (inter-eNB CA). For example, in DC, DL signals to use a licensed band and an unlicensed band are transmitted from varying transmission points (for example, from varying radio base stations).

Also, as illustrated in FIG. 1A (CA) and FIG. 1B (DC), a mode to presume the presence of licensed band-based LTE (licensed LTE) in LTE-U operation is referred to as "licensed band assisted access" (LAA: Licensed-Assisted Access). In LAA, licensed band LTE and unlicensed band LTE cooperate to communicate with user terminals. Consequently, for example, information about communication in the unlicensed band (LTE-U) can be reported to user terminals by using the licensed band.

Note that a configuration may be employed here in which a transmission point to use the licensed band (for example, a radio base station) and a transmission point to use the unlicensed band, if apart, are connected with a backhaul link (for example, optical fiber, the X2 interface, etc.).

As illustrated in FIG. 1C, in stand-alone, a cell (LTE-U base station) that operates LTE-U using an unlicensed band operates alone. In this case, a user terminal can establish an initial connection with the LTE-U base station. Consequently, in the stand-alone mode of operation, a scenario in which non-operators (for example, individuals) set up LTE-U base stations (access points) may be possible.

Also, in the CA/DC operation modes shown in above FIG. 1A and FIG. 1B, for example, it is possible to use the licensed band CC as the primary cell (PCell) and the unlicensed band CC as a secondary cell (SCell). Here, the primary cell (PCell) refers to the cell to manage RRC connection, handover and so on when CA is executed, and is also a cell that requires UL communication in order to receive data and feedback signals from terminals. When CA is executed, the primary cell is always configured in the uplink and the downlink. A secondary cell (SCell) refers to another cell that is configured apart from the primary cell when CA is employed. A secondary cell may be configured in the downlink alone, or may be configured in both the uplink and the downlink at the same time.

Now, unlike a licensed band, an unlicensed band is not limited to use by a specific communication provider (operator). Generally speaking, assuming there are varying operators, it is difficult allow an operator to control another operator's cell planning (cell arrangement). Furthermore, in the stand-alone mode of operation, it might occur that non-operator (for example, individuals) apart from the operators providing services in the licensed band set up LTE-U base stations.

Also, it might occur that varying operators and non-operators operate LTE-U base stations, Wi-Fis and so on without even establishing synchronization, coordination and/or cooperation between them. In this case, in any of the above modes of operation of LTE-U illustrated in FIGs. 1A to 1C, there is a possibility that the same frequency or neighboring frequencies are used in different operators' LTE-U and Wi-Fi systems, making mutual interference a significant problem.

In a Wi-Fi system that presumes operation in an unlicensed band without coordination, carrier sense multiple access/collision avoidance (CSMA/CA), which is based on the mechanism of LBT (Listen Before Talk), is employed in order to reduce interference with other systems. Here, the LBT mechanism refers to the kind of operation to perform listening before transmitting DL signals and detect/measure the DL signals transmitted from other access points.

In this way, in a Wi-Fi system, a method whereby each transmission point performs listening (CCA: Clear Channel Assessment) before carrying out DL transmission, and carries out DL transmission only when there is no signal beyond a predetermined level. If, as a result of listening, a DL signal transmitted from another access point is detected, for example, the operation of holding transmission for a predetermined period of time (for example, 3 ms) and then trying listening again is executed (random backoff).

So, in LTE-U systems, too, as in Wi-Fi systems, the method of stopping DL communication completely depending on listening results (LBT + random back off) may be possible.

However, if DL transmission from an LTE-U base station stops completely for a predetermined period of time, the synchronization between a user terminal and the LTE-U base station fails (which the user terminal identifies as a "radio link failure"). In this case, the user terminal needs to execute the LTE-U base station detection operation (synchronization process) again. Also, in areas where the traffic is heavy, there are more periods in which DL signals cannot be transmitted from LTE-U base stations, so that a decrease in spectral efficiency is likely. As a result of this, there is a threat that the throughput in LTE-U systems decreases.

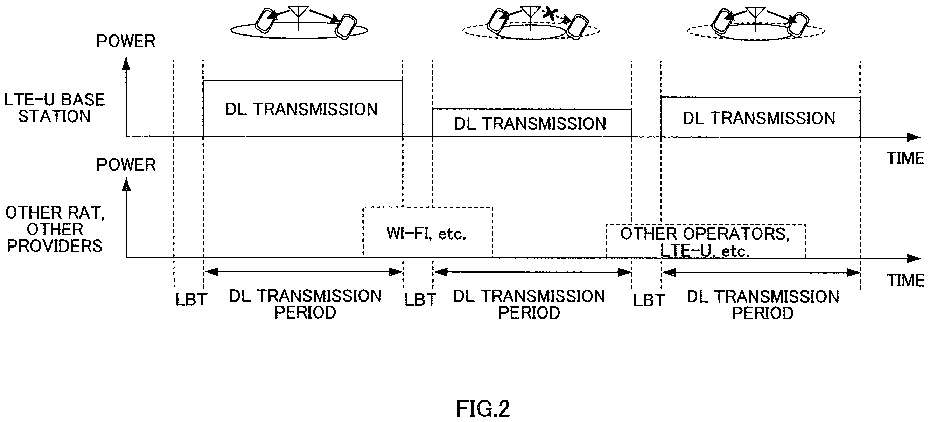

So, for LTE-U, the present inventors have come up with the idea of controlling DL transmission power from LTE-U base stations (TPC: Transmit Power Control), instead of completely stopping DL signal transmission, depending on results of LBT. That is, when an LTE-U base station detects a DL signal transmitted from another transmission point by way of listening, the LTE-U base station controls the DL transmission power for predetermined period of time based on the detected DL signal's power level and so on (see FIG. 2).

As shown in FIG. 2, when an LTE-U base station executes DL transmission power control (DL TPC) depending on results of listening (LBT), the DL transmission power changes, dynamically, in every predetermined DL transmission period (for example, in every subframe set that is several ms long). Note that the predetermined period may be configured the same as the default value (3 ms) of the maximum continuous transmission time following LBT in Wi-Fi, or may be made a different subframe set period.

On the other hand, when an LTE-U base station changes the DL transmission power dynamically, the received power value of DL signals received in a user terminal also changes. Consequently, even when the user terminal does not move in a cell formed by the LTE-U base station, there is a threat the user terminal might interpret a change of the received power value of DL signals as a change in the distance to the LTE-U base station. For example, if the LTE-U base station lowers the DL transmission power significantly based on a result of LBT, the received power of DL signals received in the user terminal lowers as well. In this case, even though the user terminal has not moved within the cell, there is a threat that the user terminal might still think it has moved farther away from the LTE-U base station.

In an LTE system, when the received power measurement value of DL signals received in a user terminal changes (when the distance with a radio base station changes), an operation to report received power information to the radio base station takes place. For example, when the received power measurement result of DL signals received in a user terminal changes and fulfills a
predetermined condition (event trigger), information about the received power is reported to the radio base station in the form of a measurement report. Also, when the received power measurement result of DL signals received in a user terminal changes, a power headroom report (PHR) for reporting the user terminal's extra transmission power is sent.

In this way, in LTE-U, executing DL transmission power control in an LTE-U base station depending on results of LBT has a threat of entailing unnecessary operations in user terminals, and, due to this, leading to increased power consumption in user terminals, decreased throughput and so on. So, the present inventors have found out that, when an LTE-U base station changes DL transmission power dynamically based on the mechanism of LBT, unnecessary operations in a user terminal can be saved by reporting changes of DL transmission power to the user terminal.

To be more specific, according to the present embodiment, an LTE-U base station controls DL transmission power based on LBT, and, furthermore, reports information related to the DL transmission power (DL TPC information) to a user terminal. The present inventors have come up with the idea that, when this takes place, the DL TPC information may be included in downlink control information (for example, in DCI format 3/3A) and reported to the user terminal. Alternatively, the present inventors have also come up with the idea of newly defining a dedicated channel for reporting DL TPC information (for example, referred to as a "physical DL-TPC indicator channel"), and reporting DL TPC information to a user terminal by using that channel.

Also, the present inventors have come with the idea of controlling reporting of DL TPC information to user terminals as appropriate depending on the mode of operation in LTE-U. That is, the present inventors have come up with the idea that, when, for example, a user terminal connects with a licensed band and an unlicensed band and the licensed band and the unlicensed band are synchronized, DL TPC information pertaining to the unlicensed band may be transmitted to the user terminal by using the licensed band. Note that the case where a licensed band and an unlicensed band are synchronized may be, for example, the case where CA is employed between the licensed band and the unlicensed band (see above FIG. 1A).

Also, when the licensed band and the unlicensed band are not synchronized, or when the unlicensed band is operated in stand-alone, DL TPC information pertaining to the unlicensed band is reported to the user terminal by using the unlicensed band.

Now, the present embodiment will be described below in detail with reference to the accompanying drawings.

### (First Example)

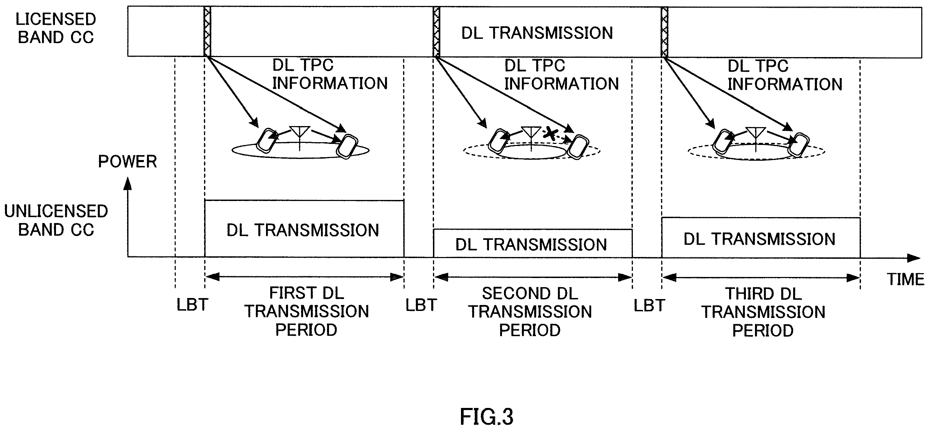

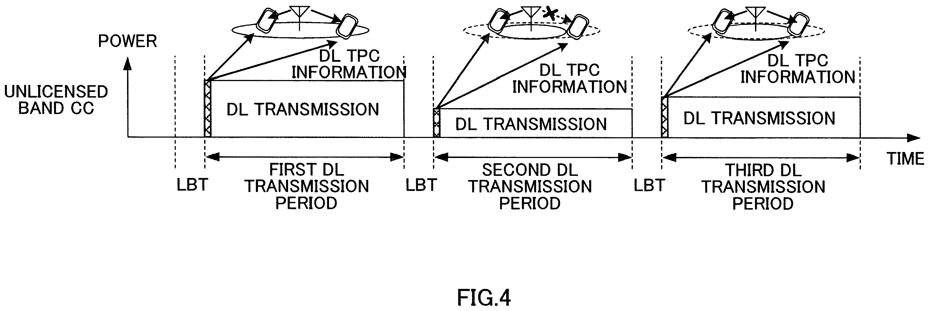

With the first example, a method, in which an LTE-U base station controls DL transmission power based on the detection/measurement results of signals transmitted from other transmission points, and, furthermore, reports information related to this DL transmission power (DL TPC information) to a user terminal, will be described in detail with reference to FIG. 3 and FIG. 4.

FIG. 3 and FIG. 4 show cases where an LTE-U base station controls DL transmission power in a first DL transmission period to a third DL transmission period based on LBT. The LTE-U base station, before transmitting DL signals in each DL transmission period, detects/measures signals from other transmission points. If, as a result of the detection/measurement operation, a signal to equal or exceed a predetermined threshold is detected, the DL transmission power for transmission in the unlicensed band is lowered. Note that the LTE-U base station controls the value of DL transmission power as appropriate depending the levels of signals detected, the number of signals, and so on. Also, each DL transmission period can be made a subframe set unit that is several ms long (for example, 3 ms).

To be more specific, FIG. 3 and FIG. 4 show cases where, in the first transmission period, the LTE-U base station transmits DL signals with normal power (reference power), without lowering the transmission power of the unlicensed band. These are equivalent to the case where, for example, in LBT which the LTE-U base station executes prior to the first transmission period, no signal from other transmission points is detected (or the signal level is lower than a predetermined threshold).

Also, cases are shown here where, in the second transmission period, the LTE-U base station transmits DL signals by lowering the transmission power for the unlicensed band substantially (for example, down to 50% of the normal power). These are equivalent to the case where, for example, in LBT which the LTE-U base station executes prior to the second transmission period, a signal from another transmission point is detected, and, furthermore, the level of this detected signal exceeds a predetermined threshold significantly (or the case many signals are detected).

Also, cases are shown here where, in the third transmission period, the LTE-U base station transmits DL signals by lowering the transmission power for the unlicensed band (for example, down to 80% of the normal power). These are equivalent to the case where, for example, in LBT which the LTE-U base station executes prior to the third transmission period, a signal from another transmission point is detected, and, furthermore, the level of the detected signal exceeds a predetermined threshold.

FIG. 3 shows a case where, in LAA (Licensed-Assisted Access), a licensed band CC (component carrier) and an unlicensed band CC are synchronized. For example, when a user terminal executes CA using the unlicensed band and the licensed band, information related to the DL transmission power controlled by an LTE-U base station (DL TPC information ) is reported from the licensed band CC to the user terminal.

For example, DL TPC information pertaining to the unlicensed band CC is included in downlink control information (DCI) and transmitted from the licensed band CC by applying cross carrier scheduling. By using downlink control information, it becomes possible to report the DL TPC information dynamically to the user terminal.

Also, the DL TPC information can be transmitted by using DCI format 3/3A (by re-using DCI format 3/3A for existing LTE systems). Here, DCI format 3/3A for existing LTE systems is a DCI format for UL transmission power control (UL TPC), and include a plurality of UL TPC commands for a plurality of user terminals. Also, DCI format 3/3A refers to a control signal that can be transmitted independently of other DCI formats (UL grants or DL assignments). Consequently, seen from the radio base station end, by using DCI format 3/3A, it is possible to transmit TPC commands to any user terminal regardless of whether or not uplink and downlink communication is carried out.

According to the present embodiment, DL TPC information, which an LTE-U base station controls based on LBT, is transmitted from a licensed band CC to a user terminal by using DCI format 3/3A. In this case, information about the location of the DL TPC bit included in DCI format 3/3A is reported to each user terminal, in advance, through higher layer signaling (for example, RRC signaling). The user terminal applies blind decoding to the downlink control information transmitted in the licensed band, and recognizes a TPC command bit value (index) included in DCI format 3/3A as the DL TPC bit for the subject user terminal. Note that the relationship between bit values (indices) and DL TPC values is also reported to the user terminal in advance through higher layer signaling (for example, through RRC signaling).

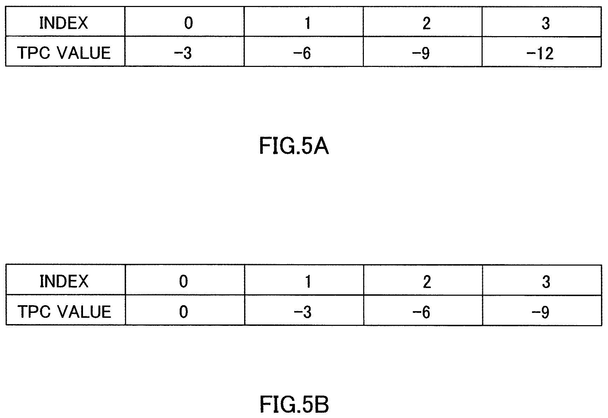

The DL TPC information to report to the user terminal may be the amount of decrease from the maximum transmission power (normal power), or may be the absolute value of the DL transmission power applied. One or two bits suffice for the TPC bits of DCI format 3/3A for each user terminal, so that the relationship between candidate DL TPC values (amounts of decrease or absolute values) and indices is reported to user terminals in advance through higher layer signaling (see FIGs. 5A and 5B). After that, predetermined indices are reported to the user terminals by using downlink control information. Note that, although FIGs. 5 show examples of relationships between indices and DL TPC values in the event the DCI format 3/3A TPC bits are two bits, this is by no means limiting.

In this way, by reporting DL TPC information to user terminals by using the licensed band, it is possible to report DL TPC information to user terminals adequately, without being influenced by the values of DL transmission power in the unlicensed band. For example, when an LTE-U base station lowers DL transmission power depending on LBT (for example, in the second DL transmission period), the cell radius to use the unlicensed band becomes smaller. In this case, there is a threat that, when normal power is applied as DL transmission power, a user terminal located on a cell edge is unable to adequately receive the signals transmitted from the LTE-U base station. Even in such cases, by reporting DL TPC information of the unlicensed band by using the licensed band, it becomes possible to adequately report DL TPC information to cell-edge user terminals.

FIG. 4 shows a case where a licensed band CC and an unlicensed band CC are not synchronized (for example, when DC is employed) or when the licensed band is operated in stand-alone. In this case, an LTE-U base station reports DL TPC information to a user terminal by using the self carrier (the unlicensed band).

For example, the LTE-U base station includes DL TPC information, which is controlled based on LBT, in downlink control information (for example, DCI format 3/3A), and transmits this from the unlicensed band CC to a user terminal. When this takes place, as in the above-noted case of employing CA, the locations of DL TPC bits included in DCI format 3/3A are reported to each user terminal by using higher layer signaling (for example, by using RRC signaling). A user terminal applies blind decoding to the downlink control information transmitted from the unlicensed band, and recognizes a TPC command (index) included in DCI format 3/3A as the DL TPC bit for the subject user terminal.

Alternatively, the LTE-U base station may be structured to newly set up a dedicated channel for reporting DL TPC information (also referred to as, for example, a "physical DL-TPC indicator channel"), and report DL TPC information to user terminals by using that channel.

Note that, as described earlier, when the LTE-U base station lowers DL transmission power depending on LBT (for example, in the second DL transmission period), the cell radius to use the unlicensed band becomes smaller. Consequently, when DL TPC is transmitted using the unlicensed band's downlink control information, DL signals are transmitted by configuring the aggregation level of downlink control information (PDCCH) high. By this means, cell edge user terminals can also receive DL signals.

### <User terminal operation>

A user terminal recognizes changes of DL transmission power applied to a licensed band (LTE-U base station) by acquiring DL TPC information using the licensed band and/or an unlicensed band.

For example, for a user terminal, DL TPC that is based on DCI format 3/3A is configured in advance, from a radio base station, through a higher layer. To be more specific, the radio base station reports, to the user terminal, information about the DL TPC bit location, the relationship between bit values (indices) and TPC values (see, for example, above FIG. 5A) and so on, by using the licensed band or the unlicensed band, through RRC signaling.

The user terminal applies blind decoding to the downlink control information (DCI), and thereby identifies, in the bit sequence included in DCI format 3/3A, one or two bits assigned to the subject user terminal as the DL TPC command for the unlicensed band CC. Consequently, by detecting DCI format 3/3A, the user terminal can judge that the DL transmission power of the unlicensed band has been changed, based on the DL TPC command bit value (index) for the subject user terminal.

In LTE systems where the premise is that DL transmission power does not change (fixed), if DL received power changes significantly, a user terminal performs an operation of sending a report (measurement report, PH report, etc.) to a radio base station. By contrast with this, according to the present embodiment, even when the DL received power in an unlicensed band changes substantially, DL TPC information is reported to a user terminal, so that the user terminal can judge, based on LBT, that the DL transmission power of the unlicensed band (LTE-U base station) has been changed.

By this means, even when the received power of DL signals received in user terminals changes substantially, it is possible to save unnecessary measurement reporting and PH reporting operations from being produced in the user terminals. As a result of this, it is possible to reduce the power consumption in the user terminals, and, furthermore, improve throughput.

Also, after having received DL TPC information, a user terminal can judge, based on predetermined conditions, that the DL transmission power of the unlicensed band (LTE-U base station) has returned to normal power (for example, to the transmission power where no LBT-induced transmission power decrease is applied). For example, upon detecting DCI format 3/3A in which DL TPC information is included, the user terminal can judge that the DL transmission power of the unlicensed band has returned to normal power, if one or any of the following conditions (1) to (4) is fulfilled.

### (1) After a certain period of time passes

When DCI format 3/3A is detected, the user terminal can judge that the DL transmission power of the LTE-U base station has returned to normal power after a certain period of time passes. Also, after the certain period of time passes, the user terminal can think that the DL transmission power will be normal power until the next LBT timing. In this case, a configuration may be employed in which DCI format 3/3A (DL TPC information) is reported to the user terminal only when the DL transmission power of the unlicensed band is lowered based on LBT.

That is, a configuration is possible in which, when, as a result of LBT, the DL transmission power of the unlicensed band is not lowered (DL transmission is carried out in normal power), DL TPC information is not reported to the user terminal. By this means, DL TPC information (for example, DCI format 3/3A) has to be reported to the user terminal only when DL transmission power is lowered in the unlicensed band, so that it is possible to reduce the overhead.

### (2) When predetermined DCI format 3/3A is received

When information to indicate that the DL transmission power of the unlicensed band is normal power is received, the user terminal can judge that normal power has been resumed. In this case, an index that can designate normal power (for example, change of DL transmission power is 0 dB) is defined as DL-TPC information, and included in DCI format 3/3A.

For example, as shown in above FIG. 5B, the TPC value to correspond to a predetermined index (here, 0) is configured to be 0 (see FIG. 5B), and the index "0" is reported to the user terminal in downlink control information (for example, DCI format 3/3A). By this means, when the DL transmission power of the unlicensed band is not changed, it becomes unnecessary to report DL TPC information (DCI format 3/3A), so that it is possible to reduce the overhead.

### (3) When unlicensed band CC is de-activated/removed

When the unlicensed band CC is de-activated/removed, the user terminal can judge that the DL transmission power of the LTE-U base station has returned to reference transmission power. In this case, when the unlicensed band CC is activated again, the user terminal can judge that the DL transmission power employed in the unlicensed band is normal power, and then start communication.

### (4) When RACH is transmitted in TAG in which unlicensed band CC is included

When synchronization fails in the TAG (Timing Advanced Group), in which the unlicensed band CC is included, the user terminal performs the synchronization process (PRACH transmission) again. In this case, the user terminal can judge that the DL transmission power employed in the unlicensed band has returned to normal power. By this means, when resuming communication with the LTE-U base station, the user terminal can judge that normal power is employed, and perform DL signal receiving processes.

Note that, according to the present embodiment, one or any of the above methods (1) to (4) may be employed individually, or may be employed in appropriate combinations. In this way, by assuming a configuration to allow a user terminal to judge that the DL transmission power of an unlicensed band has returned to normal power based on predetermined conditions, it is possible to carry out DL signal receiving processes adequately.

### (Second Example)

A case will be described with a second example where the timing to report DL TPC information to a user terminal is controlled.

As noted earlier, when the DL transmission power of an LTE-U base station (unlicensed band) changes based on LBT, at least DL TPC information is reported to a user terminal. By contrast with this, the DL transmission power that is employed in the unlicensed band based on the result of LBT can be fixed for a predetermined period of time (for example, several ms).

That is, DL TPC information has to be reported to a user terminal at least when LBT is carried out, and, in other timings, it is possible to make it unnecessary to report DL TPC information (for example, DCI format 3/3A).

For example, as shown in above FIG. 3, assume a case where an LTE-U base station performs LBT prior to every DL transmission period (first transmission period to third transmission period) and controls DL transmission power. In this case, the LTE-U base station associates and controls the timings of LBT (the operation of detecting/measuring signals from other transmission points) and the timings to report DL-TPC information.

That is, DCI format 3/3A-based DL TPC commands (for transmission of DL TPC information) are configured in association with the timings of LBT carried out by the LTE-U base station. For example, by using the licensed band or the unlicensed band, the radio base station can report DL TPC information to a user terminal within a predetermine number of subframes from a subframe in which LBT is executed (for example, in the subframe immediately after the subframe LBT is executed).

In this case, in subframes other than the subframe in which DL TPC information is transmitted, DCI format 3/3A can be used as UL TPC for the licensed band CC, as in existing LTE. By this means, it becomes possible to use DCI format 3/3A as existing UL TPC and as DL TPC, depending on the timing of transmission.

### (Example Structure of Radio Communication System)

Now, a structure of a radio communication system according to the present embodiment will be described below. In this radio communication system, the above radio communication methods according to the first and second examples are employed. Note that the above radio communication methods according to the first and second examples may be applied individually or may be applied in combination.

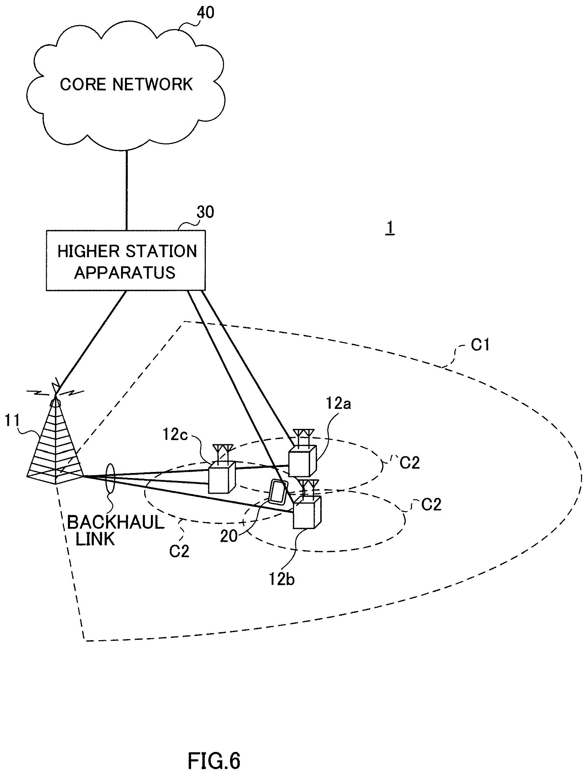

FIG. 6 is a schematic configuration diagram of a radio communication system according to the present embodiment. Note that the radio communication system shown in FIG. 6 is, for example, an LTE system, or a system to accommodate SUPER 3G. This radio communication system can adopt carrier aggregation (CA) to group a plurality of fundamental frequency blocks (component carriers) into one, where the LTE system bandwidth constitutes one unit, or adopt stand-alone. Also, the radio communication system shown in FIG. 6 uses an unlicensed band (LTE-U base station). Note that this radio communication system may be referred to as "IMT-advanced," or may be referred to as "4G," "FRA"

### (Future Radio Access), etc.

The radio communication system 1 shown in FIG. 6 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2. For example, a mode of use may be possible here in which the macro cell C1 is used in a licensed band and the small cells C2 are used in an unlicensed band (LTE-U).

Alternatively, a mode of use may be possible in which the radio base station 11 uses a licensed band and an unlicensed band. In this case, the licensed band cell and the unlicensed band cell which the radio base station 11 forms may have different sizes.

The user terminals 20 can connect with both the radio base station 11 and the radio base stations 12. In this case, the user terminals 20 may use the macro cell C1 and the small cells C2, which use different frequencies, at the same time, by means of CA or DC. For example, the radio base station 11 can transmit, to a user terminal 20, assist information (DL TPC information) that pertains to the radio base stations 12 (including, for example, an LTE-U base station). Also, when an LTE-U base station (for example, a radio base station 12) operates in stand-alone, a user terminal 20 establishes an initial connection with the LTE-U base station.

Between the user terminals 20 and the radio base station 11, communication is carried out using a carrier of a relatively low frequency band (for example, 2 GHz) and a narrow bandwidth (referred to as, for example, "existing carrier," "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Between the radio base station 11 and the radio base stations 12 (or between the radio base stations 12), wire connection (optical fiber, the X2 interface and so on) or wireless connection is established.

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as an "eNodeB," a "macro base station," a "transmitting/receiving point" and so on. Also, the radio base stations 12 are radio base stations having local coverages, and may be referred to as "small base stations," "pico base stations," "femto base stations," "home eNodeBs," "RRHs" (Remote Radio Heads), "micro base stations," "transmitting/receiving points" and so on. Hereinafter the radio base stations 11 and 12 will be collectively referred to as a "radio base station 10," unless specified otherwise. The user terminals 20 are terminals to support various communication schemes such as LTE, LTE-A and so on, and may be either mobile communication terminals or stationary communication terminals.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single-carrier transmission scheme to mitigate interference between terminals by dividing the system band into bands formed with one or continuous resource blocks per terminal, and allowing a plurality of terminals to use mutually different bands.

Here, communication channels used in the radio communication system shown in FIG. 6 will be described. Downlink communication channels include a PDSCH (Physical Downlink Shared CHannel), which is used by each user terminal 20 on a shared basis, and downlink L1/L2 control channels (PDCCH, PCFICH, PHICH and enhanced PDCCH). User data and higher control information are communicated by the PDSCH. Scheduling information for the PDSCH and the PUSCH and so on are communicated by the PDCCH (Physical Downlink Control CHannel). The number of OFDM symbols to use for the PDCCH is communicated by the PCFICH (Physical Control Format Indicator CHannel). HARQ ACKs/NACKs for the PUSCH are communicated by the PHICH (Physical Hybrid-ARQ Indicator CHannel). Also, the scheduling information for the PDSCH and the PUSCH and so on may be communicated by the enhanced PDCCH (EPDCCH) as well. This EPDCCH is frequency-division-multiplexed with the PDSCH (downlink shared data channel).

Uplink communication channels include a PUSCH (Physical Uplink Shared CHannel), which is used by each user terminal 20 on a shared basis as an uplink data channel, and a PUCCH (Physical Uplink Control CHannel), which is an uplink control channel. User data and higher control information are communicated by this PUSCH. Also, by the PUCCH, downlink radio quality information (CQI), delivery acknowledgement signals (ACK/NACK) and so on are communicated.

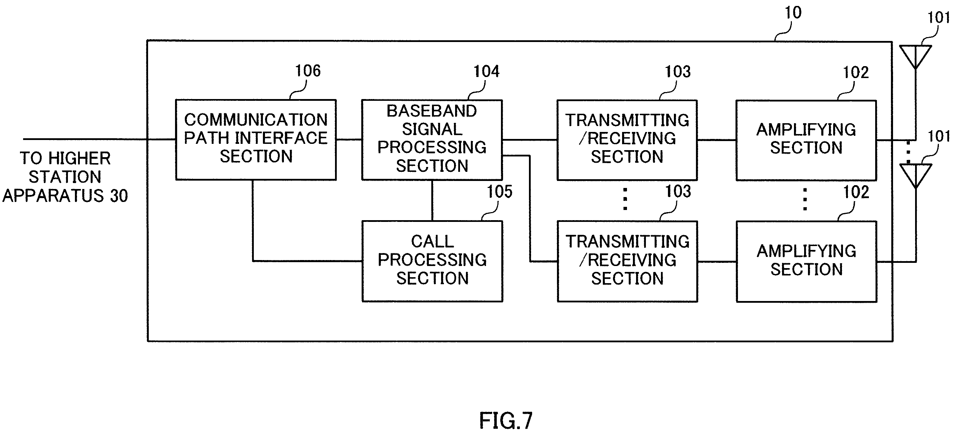

FIG. 7 is a diagram to show an overall structure of a radio base station 10 (which may be either a radio base station 11 or a radio base station 12) according to the present embodiment. The radio base station 10 has a plurality of transmitting/receiving antennas 101 for MIMO communication, amplifying sections 102, transmitting/receiving sections (transmitting sections/receiving sections) 103, a baseband signal processing section 104, a call processing section 105, and a communication path interface 106.

User data to be transmitted from the radio base station 10 to a user terminal 20 on the downlink is input from the higher station apparatus 30 to the baseband signal processing section 104, via the communication path interface 106.

In the baseband signal processing section 104, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process are performed, and the result is forwarded to each transmitting/receiving section 103. Furthermore, downlink control channel signals are also subjected to transmission processes such as channel coding and an inverse fast Fourier transform, and forwarded to each transmitting/receiving section 103.

Also, the baseband signal processing section 104 reports, to the user terminal 20, control information (system information) for allowing communication in the cell, through higher layer signaling (RRC signaling, broadcast information and so on). The information for allowing communication in the cell includes, for example, the uplink or downlink system bandwidth and so on.

Also, in the licensed band, the radio base station (for example, the radio base station 11) may transmit assist information (for example, DL TPC information and so on) related to communication in the unlicensed band to the user terminal.

Each transmitting/receiving section 103 converts the baseband signals, pre-coded and output from the baseband signal processing section 104 on a per antenna basis, into a radio frequency band. The amplifying sections 102 amplify the radio frequency signals having been subjected to frequency conversion, and transmit the signals through the transmitting/receiving antennas 101.

On the other hand, as for data to be transmitted from the user terminals 20 to the radio base station 10 on the uplink, radio frequency signals that are received in the transmitting/receiving antennas 101 are each amplified in the amplifying sections 102, converted into the baseband signal through frequency conversion in each transmitting/receiving section 103, and input in the baseband signal processing section 104.

In the baseband signal processing section 104, the user data that is included in the input baseband signal is subjected to an FFT process, an IDFT process, error correction decoding, a MAC retransmission control receiving process, and RLC layer and PDCP layer receiving processes, and the result is forwarded to the higher station apparatus 30 via the communication path interface 106. The call processing section 105 performs call processing such as setting up and releasing communication channels, manages the state of the radio base stations 10 and manages the radio resources.

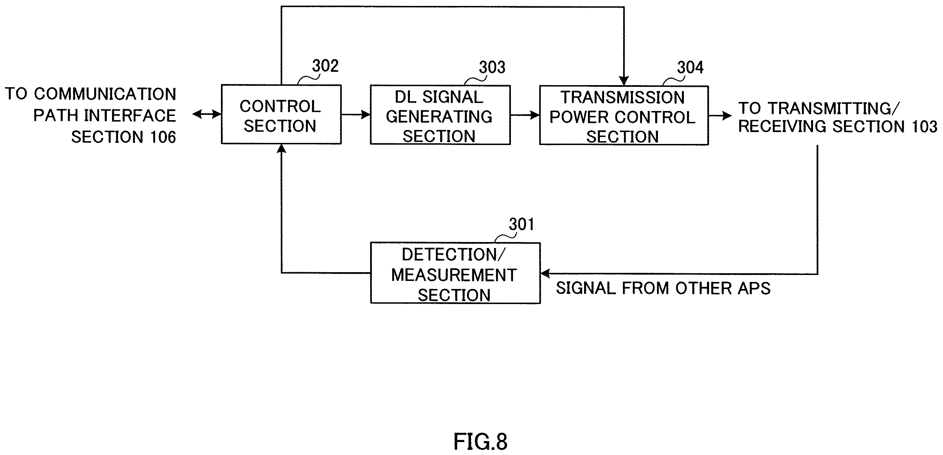

FIG. 8 is a diagram to show a principle functional structure of the baseband signal processing section 104 provided in the radio base station according to the present embodiment (which is, for example, a LTE-U base station to use an unlicensed band). Note that, although FIG. 8 primarily shows function blocks corresponding to the characteristic part of the present embodiment, assume that the radio base station 10 also has other function blocks that are required for radio communication.

As shown in FIG. 8, the radio base station 10 has a detection/measurement section 301 (detection section), a control section 302 (scheduler), a DL signal generating section 303, and a transmission power control section 304.

The detection/measurement section 301 detects signals transmitted from other transmission points in the unlicensed band. To be more specific, the detection/measurement section 301 detects/measures signals from other transmission points in predetermined timings (for example, in timings to execute LBT) and outputs the results of this detection /measurement operation to the control section 302.

When doing so, the detection /measurement section 301 may send a report to the control section 302 only when a signal that is detected exhibits a power level equal to or higher than a predetermined threshold. Also, the detection /measurement section 301 can output information about the power level of signals detected, the number of signals detected and so on, to the control section 302.

The control section 301 controls the scheduling of downlink data signals transmitted in the PDSCH and downlink control signals that are transmitted in the PDCCH and/or the enhanced PDCCH (EPDCCH). Furthermore, the control section 301 controls the scheduling of downlink reference signals such as system information, synchronization signals, CRSs, CSI-RSs and so on.

Also, the control section 302 determines the transmission power to apply to DL signals based on the detection/measurement result yielded in the detection/measurement section 301, and indicate this to the transmission power control section 304. Furthermore, the control section 302 executes control so that, when changing the DL transmission power, information related to this DL transmission power (DL TPC information) is reported to a user terminal. The control section 302 can control the method of reporting DL TPC information depending on the mode of operation in the LTE-U base station.

For example, when the licensed band and the unlicensed band are synchronized (for example, when CA is employed), the control section 302 executes control so that DL TPC information is transmitted by using downlink control information (for example, DCI format 3/3A) that is transmitted in the licensed band (see above FIG. 3). On the other hand, when the licensed band and the unlicensed band are not synchronized (for example, when DC or stand-alone is employed), the control section 302 executes control so that DL TPC information is transmitted by using downlink control information (for example, DCI format 3/3A) that is transmitted in the unlicensed band (see above FIG. 4). Alternatively, the control section 302 executes control so that DL TPC information is transmitted by using a channel for DL TPC information, which is configured in the unlicensed band.

The DL signal generating section 303 generates DL signals based on commands from the control section 302. The DL signals may include DL data signals, downlink control signals, reference signals and so on. When changing DL transmission power in accordance with LBT in the detection/measurement section 301, the DL signal generating section 303 generates DL TPC information. For example, the DL signal generating section 303 generates DL TPC information, included in a downlink control signal (DCI format 3/3A).

The transmission power control section 304 controls the DL transmission power to apply to the unlicensed band in accordance with commands from the control section 302.

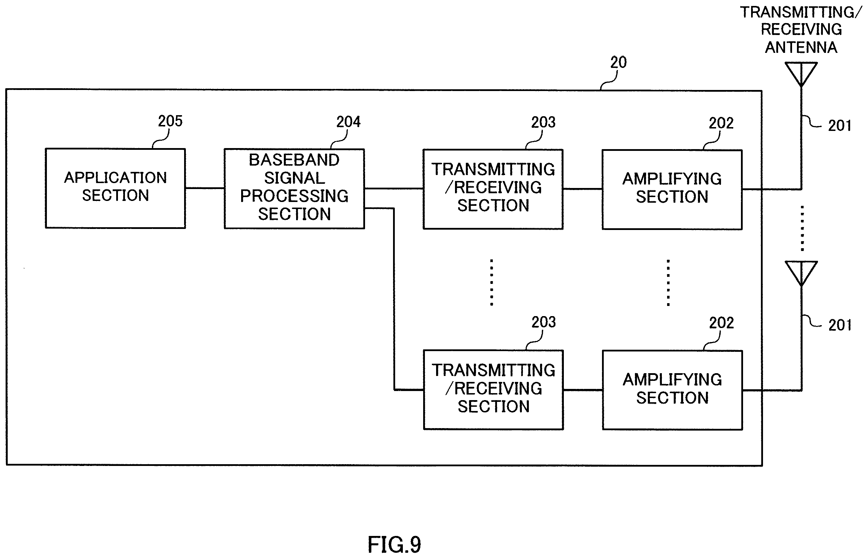

FIG. 9 is a diagram to show an overall structure of the user terminal 20 according to the present embodiment. The user terminal 20 has a plurality of transmitting/receiving antennas 201 for MIMO communication, amplifying sections 202, transmitting/receiving sections 203 (transmitting sections/receiving sections) 203, a baseband signal processing section 204 and an application section 205.

As for downlink data, radio frequency signals that are received in the plurality of transmitting/receiving antennas 201 are each amplified in the amplifying sections 202, and subjected to frequency conversion and converted into the baseband signal in the transmitting/receiving sections 203. This baseband signal is subjected to receiving processes such as an FFT process, error correction decoding and retransmission control (HARQ-ACK), in the baseband signal processing section 204. In this downlink data, downlink user data is forwarded to the application section 205. The application section 205 performs processes related to higher layers above the physical layer and the MAC layer. Also, in the downlink data, broadcast information is also forwarded to the application section 205.

Meanwhile, uplink user data is input from the application section 205 to the baseband signal processing section 204. In the baseband signal processing section 204, a retransmission control (HARQ-ACK) transmission process, channel coding, precoding, a DFT process, an IFFT process and so on are performed, and the result is forwarded to each transmitting/receiving section 203. The baseband signal that is output from the baseband signal processing section 204 is converted into a radio frequency band in the transmitting/receiving sections 203. After that, the amplifying sections 202 amplify the radio frequency signals having been subjected to frequency conversion, and transmit the resulting signals from the transmitting/receiving antennas 201.

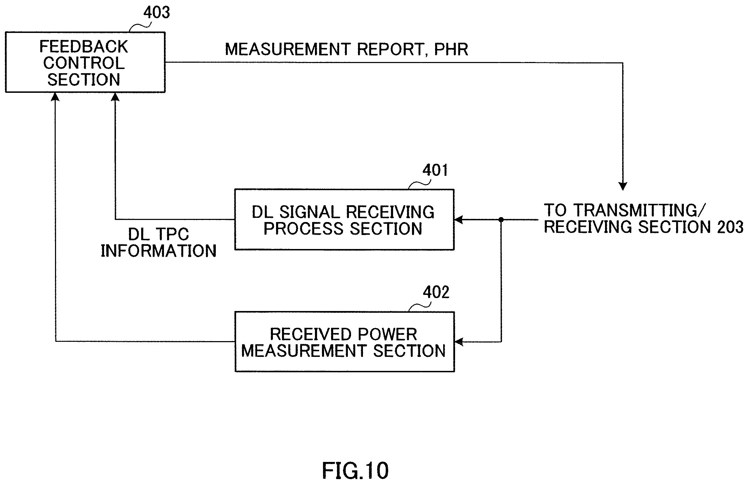

FIG. 10 is a diagram to show a principle functional structure of the baseband signal processing section 204 provided in the user terminal 20. Note that, although FIG. 10 primarily shows function blocks corresponding to the characteristic part of the present embodiment, assume that the user terminal 20 also has other function blocks that are required for radio communication.

As shown in FIG. 10, the baseband signal processing section 204 provided in the user terminal 20 is comprised of a DL signal receiving process section 401, a received power measurement section 402 and a feedback control section 403.

The DL signal receiving process section 401 performs receiving processes (decoding, demodulation and so on) of DL signals transmitted in the licensed band or the unlicensed band. For example, the DL signal receiving process section 401 acquires the DL TPC information included in the downlink control signal (for example, DCI format 3/3A), and outputs this to the feedback control section 403.

The received power measurement section 402 measures the received power of DL signals. For example, the received power measurement section 402 measures the received power value of DL signals transmitted from the LTE-U base station (unlicensed band), and reports the measurement results to the feedback control section 403.

The feedback control section 403 controls the transmission processes (reporting operation and so on) of UL signals for the radio base station. For example, assume a case where DL TPC that is based on DCI format 3/3A is configured in the user terminal, in advance, from the radio base station, through a higher layer. In this case, the feedback control section 403 judges whether or not the DL transmission power of the unlicensed band is changed based on the DL TPC information reported from the DL signal receiving process section 401.

In this way, even when the received power value of the unlicensed band measured in the received power measurement section 402 is lower than normal power, the feedback control section 403 decides the received power of the unlicensed band taking into account the DL TPC information. For example, even when the received power value of the unlicensed band is lowered, the feedback control section 403, if the feedback control section 403 judges that the DL transmission power of the LTE-U base station has decreased, based on the DL TPC information, the feedback control section 403 then does not perform the operation of sending a report (measurement report, PH report, etc.) to the radio base station.

By this means, in the feedback control section 403 can save unnecessary measurement reporting and PH reporting operations from being produced, so that it is possible to reduce the power consumption in user terminals, and, furthermore, improve throughput.

Also, as mentioned earlier, after DL TPC information is received, the feedback control section 403 can judge, based on predetermined conditions, that the DL transmission power of the unlicensed band (LTE-U base station) has returned to normal power.

As described above, according to the present embodiment, when an LTE-U base station changes DL transmission power dynamically based on the mechanism of LBT, changes of DL transmission power are reported to user terminals. By this means, it becomes possible to save unnecessary operations in user terminals, and, furthermore, prevent the decrease of throughput.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention defined by the recitations of claims. For example, a plurality of examples described above may be combined and implemented as appropriate. Consequently, the description herein is only provided for the purpose of illustrating examples, and should by no means be construed to limit the present invention in any way.

The disclosure of Japanese Patent Application No. 2014-056966, filed on March 19, 2014, including the specification, drawings and abstract, is incorporated herein by reference in its entirety.

## Claims

1. A radio base station that communicates with a user terminal by using an unlicensed band, the radio base station comprising:
a detection section that detects signals transmitted from other transmission points in the unlicensed band;
a power control section that controls DL transmission power to apply to the unlicensed band based on detection results in the detection section; and
a transmission section that transmits signals by using the DL transmission power determined in the power control section,
wherein control is executed so that information related to the DL transmission power is reported to the user terminal.

2. The radio base station according to claim 1, wherein control is executed so that, when the user terminal employs carrier aggregation using the unlicensed band and a licensed band, the information related to the DL transmission power is reported to the user terminal by using downlink control information that is transmitted in the licensed band.

3. The radio base station according to claim 1, wherein the transmission section reports the information related to the DL transmission power to the user terminal by using downlink control information that is transmitted in the unlicensed band, or by using a channel for the information related to the DL transmission power configured in the unlicensed band.

4. The radio base station according to claim 2 or claim 3, wherein DCI format 3/3A is used as a format for the downlink control information.

5. The radio base station according to claim 4, wherein, a bit location for the information related to the DL transmission power, configured in DCI format 3/3A, is reported to the user terminal through higher layer signaling.

6. The radio base station according to claim 4, wherein the detection section performs a detection operation based on an LBT (Listen Before Talk) mechanism, and reports the information related to the DL transmission power, determined in the power control section, to the user terminal, by using DCI format 3/3A of a specific subframe that is associated with the detection operation.

7. The radio base station according to claim 6, wherein the specific subframe associated with the detection operation is a next subframe following the subframe in which the detection operation is performed based on the LBT mechanism.

8. A user terminal that communicates with a radio base station by using an unlicensed band, the user terminal comprising:
a receiving section that receives a DL signal transmitted from the radio base station; and
a feedback control section that controls feed back of information related to received power to the radio base station, depending on a received power value of the DL signal received, wherein:
the receiving section receives information related to the DL transmission power to apply to the unlicensed band; and
the feedback control section controls an operation of sending a report to the radio base station based on the information related to the DL transmission power.

9. The user terminal according to claim 8, wherein, when the user terminal employs carrier aggregation by using the unlicensed band and a licensed band, the receiving section receives the information related to the DL transmission power by using the licensed band.

10. A radio communication method in a radio base station that communicates with a user terminal in an unlicensed band, the radio communication method comprising the steps of:
detecting signals transmitted from other transmission points in the unlicensed band;
controlling DL transmission power to apply to the unlicensed band based on detection results; and
transmitting signals by using the determined DL transmission power,
wherein control is executed so that information related to the DL transmission power is reported to the user terminal.
